Europäisches Patentamt

European Patent Office

Office européen des brevets

(11) Veröffentlichungsnummer: **0 342 461 B1**

(12) **EUROPÄISCHE PATENTSCHRIFT**

(45) Veröffentlichungstag der Patentschrift: **30.12.92**

(21) Anmeldenummer: **89108226.5**

(22) Anmeldetag: **08.05.89**

(51) Int. Cl.⁵: **F15B 18/00**, B64C 13/42,
F15B 9/03

(54) **Vorrichtung zum Ansteuern eines durch einen Elektromotor betätigbaren Ventils durch redunant vorgesehene Regler.**

(30) Priorität: **14.05.88 DE 3816572**

(43) Veröffentlichungstag der Anmeldung:
**23.11.89 Patentblatt 89/47**

(45) Bekanntmachung des Hinweises auf die
Patenterteilung:
**30.12.92 Patentblatt 92/53**

(84) Benannte Vertragsstaaten:
**DE ES FR GB IT**

(56) Entgegenhaltungen:
**EP-A- 0 088 357     EP-A- 0 098 719
EP-A- 0 178 819     DD-A- 146 201
DE-A- 2 903 122     DE-A- 3 703 004
US-A- 3 702 575**

**PATENT ABSTRACTS OF JAPAN vol. 7, no.
163 (M-229)(1308) 16 Juli 1983, & JP-A-58
68504 (HITACHI) 23 April 1983**

(73) Patentinhaber: **Bodenseewerk Gerätetechnik
GmbH
Alte Nussdorfer Strasse 15 Postfach 1120
W-7770 Überlingen/Bodensee(DE)**

(72) Erfinder: **Reichel, Reinhard Wolfram
Schilfweg 2
W-7770 Überlingen(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg(DE)**

## Beschreibung

### Technisches Gebiet

Die Erfindung betrifft eine Vorrichtung zum Ansteuern eines von einem Elektromotor betätigbaren Ventils durch redundant vorgesehene Regler, bei welcher

(a) der Elektromotor eine Mehrzahl von Magnetwicklungen aufweist,

(b) jede dieser Magnetwicklungen von einem von mehreren redundant vorgesehenen, bei ungestörtem Betrieb im wesentlichen übereinstimmend arbeitenden Reglern über Verstärkermittel erregbar ist,

(c) die Regler von einem Stellungssollwert und einem durch die Stellung des Ventils bestimmten Rückführsignal beaufschlagt sind.

### Zugrundeliegender Stand der Technik

Zur Betätigung von Steuerflächen bei Flugzeugen ist es bekannt, ein Schieberventil von einem Linearmotor zu verstellen. Das Schieberventil steuert die Druckmittelzufuhr zu einem hydraulischen Stellmotor, der die Steuerfläche verstellt. Dieser Stellmotor ist ein Stellzylinder mit einem doppelt wirkenden, also auf beiden Seiten von Druckmittel beaufschlagten Stellkolben. Der Stellkolben unterteilt den Stellzylinder in zwei Zylinderkammern. Das Schieberventil steuert die Verbindung der Zylinderkammern mit einer Quelle von Druckmittel unter Druck und mit einem Druckmittelrücklauf.

Der Linearmotor enthält einen Anker, der unter dem Einfluß einer Feder steht und der durch magnetische Kräfte von einem Stator linear beweglich ist. Mit dem Anker ist der Schieber des Schieberventils unmittelbar verbunden.

Aus Sicherheitsgründen sind bei Flugzeugen Regler redundant vorgesehen, d.h. es sind mehrere Regler vorgesehen, welche die gleiche Funktion erfüllen. Bei Ausfall eines der Regler stehen dann noch die übrigen Regler zur Verfügung. Eine Überwachung (Redundanzmanagement) stellt aus den Signalen sämtlicher Regler fest, wenn ein Regler als defekt anzusehen ist, und sorgt dafür, daß das von diesem Regler gelieferte, fehlerhafte Steuersignal eliminiert wird.

Die Ansteuerung des oben erwähnten Linearmotors durch diese redundant vorgesehenen Regler erfolgt in der Weise, daß der Stator des Linearmotors für jeden Regler eine Magnetwicklung aufweist. Jeder Regler steuert nach dem Stand der Technik die zugehörige Magnetwicklung über einen $U_E$-$I_A$-Verstärker. Das ist praktisch ein Regler, der seinen Ausgangsstrom $I_A$ auf einen der Eingangsspannung $U_E$ proportionalen Wert regelt, unabhängig vom Zustand des Ausgangskreises. Die Regler bilden Teile von redundant, in der Regel vierfach redundant vorgesehenen Flugregelrechnern (FCC = Flight Control Computer). Es sind Rückführungen von der Stellung des Schiebers (innerer Regelkreis) und von der Stellung des Stellmotors (äußerer Regelkreis) auf jeden Flugregelrechner vorgesehen.

Die $U_E$-$I_A$-Verstärker stellen einen recht erheblichen technischen Aufwand dar.

Im Zusammenhang mit einer Vermehrfachung der Regler und der Magnetspulen ergibt sich ein besonderes Problem: Bei Ausfall eines Reglers oder FCCs wird dieser Fehler durch geeignete Redundanzverwaltung festgestellt und durch Abschalten des betreffenden FCCs eliminiert. Das erfordert aber eine gewisse Zeit. Während dieser Zeit kann bei der bekannten Vorrichtung der Schieber vorübergehend in eine falsche Position gefahren werden.

### Offenbarung der Erfindung

Der Erfindung liegt die Aufgabe zugrunde, eine Vorrichtung der eingangs genannten Art so auszubilden, daß bei Ausfall eines FCCs die Verstellung des Schiebers in eine falsche Position verzögert wird.

Erfindungsgemäß wird diese Aufgabe dadurch gelöst, daß

(d) die Verstärkermittel von einem Leistungsverstärker gebildet sind, der eine Reglerausgangsspannung in eine Verstärkerausgangsspannung höherer Leistung umsetzt.

Der Linearmotor ist wie jedes Magnetsystem bestrebt, einen bestehenden Magnetfluß aufrechtzuerhalten. Wenn also ein FCC ausfällt und ein plötzlich geändertes, von den anderen Signalen abweichendes Ausgangssignal $U_E$ liefert, dann wird durch die Änderung des Magnetflusses eine Spannung in der betreffenden Magnetspule induziert, welche dieser Änderung entgegenzuwirken trachtet. Die Änderung der Ausgangsspannung $U_A$ des Leistungsverstärkers wird daher nur zu einem geringen Teil nach außen wirksam.

Bei einer Anordnung nach dem Stande der Technik würden die $U_E$-$I_A$-Verstärker, die den intakten FCCs zugeordnet sind, der induzierten Gegenspannung entgegenwirken. Dadurch würde die Änderung der Ausgangsspannung an dem fehlerhaften FCC zugeordneten $U_E$-$I_A$-Verstärker sofort nach außen wirksam, wodurch der Schieber in eine fehlerhafte Position fahren würde. Bei der erfindungsgemäßen Vorrichtung wird dagegen ein schnelles Wirksamwerden des auftretenden Fehlers verhindert. Dadurch wird es dem Redundanzmanagement ermöglicht, den aufgetretenen Fehler rechtzeitig zu erkennen und zu eliminieren.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

## Kurze Beschreibung der Zeichnungen

Fig.1 zeigt eine Vorrichtung zur Ansteuerung eines hydraulischen Stellmotors von vier redundant vorhandenen Flugregelrechnern (FCCs) über einen Linearmotor mit vier Magnetwicklungen.

Fig.2 ist ein Blockschaltbild und zeigt den Regler und den Leistungsversärker in einem Kanal.

## Bevorzugte Ausführung der Erfindung

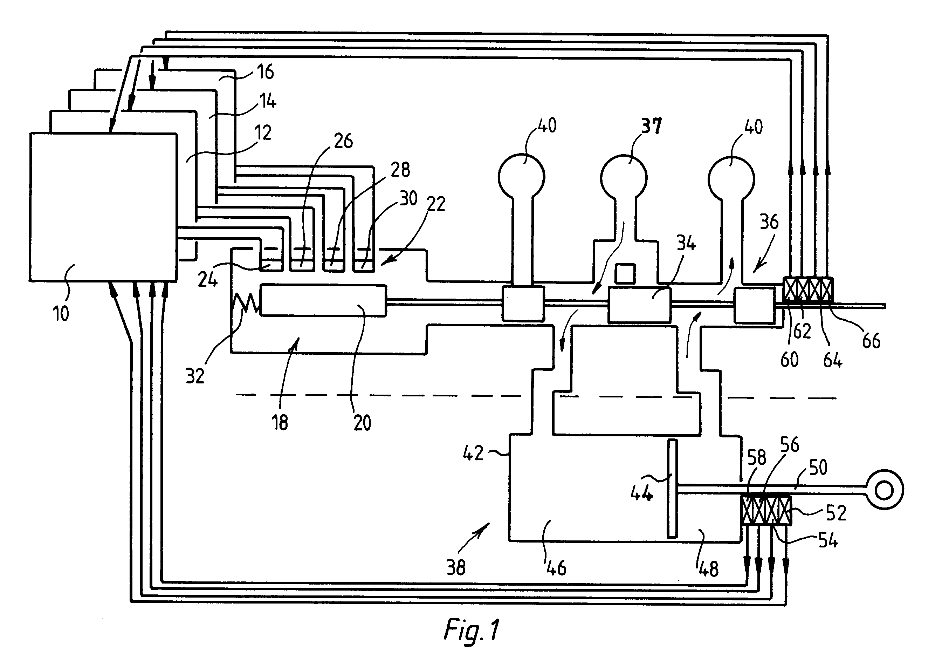

In Fig. 1 sind vier redundant vorgesehene Flugregelrechner (FCCs) 10,12,14 und 16 dargestellt, die einen Linearmotor 18 ansteuern. Der Linearmotor 18 weist einen Anker 20 und einen Stator 22 mit vier Magnetwicklungen 24,26,28 und 30 auf. Die Magnetwicklung 24 ist von dem Flugregelrechner 10 ansteuerbar. Die Magnetwicklung 26 ist von dem Flugregelrechner 12 ansteuerbar. Die Magnetwicklung 28 ist von dem Flugregelrechner 14 ansteuerbar, Die Magnetwicklung 30 ist von dem Flugregelrechner 16 ansteuerbar. Der Anker steht unter dem Einfluß einer Feder 32. Die Magnetwicklungen 24, 26,28 und 30 üben Magnetkräfte auf den Anker 20 aus. Der Anker 20 wird dementsprechend aus seiner Ruhestellung verstellt.

Mit dem Anker 20 des Linearmotors 18 ist ein Schieber 34 eines Schieberventils 36 unmittelbar verbunden. Der Schieber 34 steuert den Strom von Druckmittel (Öl) von einer Quelle 37 von Druckmittel unter Druck, praktisch einer Pumpe, zu einem hydraulischen Stellmotor 38 und den Rücklauf des Druckmittels von dem Stellmotor 38 zu einem Behälter 40. Der Stellmotor 38 ist ein Stellzylinder 42 mit einem Stellkolben 44. Der Stellkolben 44 unterteilt den Stellzylinder 42 in zwei Zylinderkammern 46 und 48. In einer Mittelstellung unterbricht der Schieber 34 die Verbindung der Zylinderkammern 46 und 48 sowohl zu der Quelle 36 als auch zu dem Behälter 40. Bei einer Bewegung des Schiebers 34 nach rechts, wie in Fig.1 dargestellt, wird eine Verbindung zwischen der Quelle 36 und der Zylinderkammer 46 hergestellt, während die Zylinderkammer 48 mit dem Behälter 40 verbunden ist. Der Stellmotor 38 bewegt dann eine mit dem Stellkolben 42 verbundene Kolbenstange 50 nach rechts in Fig.1. Bei einer Bewegung des Schiebers 34 nach links wird die Zylinderkammer 48 mit der Quelle 36 verbunden und die Zylinderkammer 46 mit dem Behälter 40. Das bewirkt eine Bewegung der Kolbenstange 50 nach links in Fig.1. Die Kolbenstange 50 verstellt eine (nicht dargestellte) Steuerfläche des Flugzeugs.

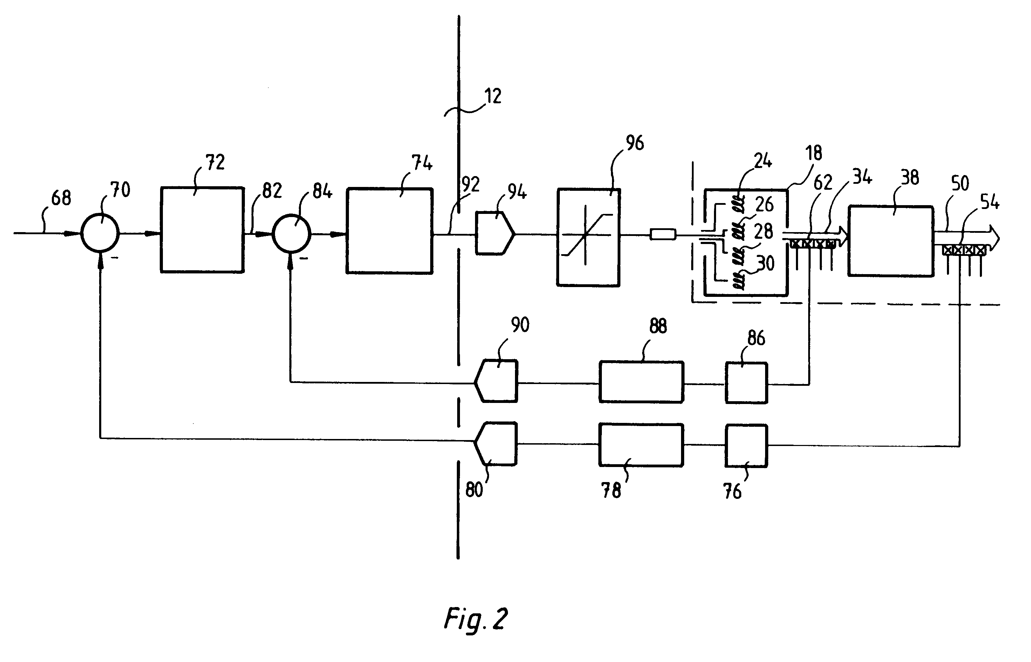

An der Kolbenstange 50 sitzen vier erste Stellungsgeber 52,54,56 und 58, welche auf die Stellung der Kolbenstange 50 oder der Steuerfläche ansprechen. Diese Stellungsgeber 52,54,56 und 58 liefern Rückführsignale. Das Rückführsignal von dem Stellungsgeber 52 ist auf den Flugregelrechner 10 geschaltet. Das Rückführsignal von dem Stellungsgeber 54 ist auf den Flugregelrechner 12 geschaltet. Das Rückführsignal von dem Stellungsgeber 56 ist auf den Flugregelrechner 14 geschaltet. Das Rückführsignal von dem Stellungsgeber 58 ist auf den Flugregelrechner 16 geschaltet. Diese Rückführsignale gehören, wie unter Bezugnahme auf Fig.2 noch erläutert wird, zu "äußeren Regelkreisen".

An dem Schieber 34 sitzen vier zweite Stellungsgeber 60,62,64 und 66. Die Stellungsgeber 60,62,64 und 66 liefern ebenfalls Rückführsignale. Das Rückführsignal von dem Stellungsgeber 60 ist auf den Flugregelrechner 10 geschaltet. Das Rückführsignal von dem Stellungsgeber 62 ist auf den Flugregelrechner 12 geschaltet. Das Rückführsignal von dem Stellungsgeber 64 ist auf den Flugregelrechner 14 geschaltet. Das Rückführsignal von dem Stellungsgeber 66 ist auf den Flugregelrechner 16 geschaltet. Diese Rückführsignale gehören zu "inneren Regelkreisen"

In Fig.2 sind für einen Kanal, der dem Flugregelrechner 12 zugeordnet ist, der innere Regelkreis und der äußere Regelkreis dargestellt.

Der Regler bildet einen Teil des digital arbeitenden Flugregelrechners 12. Der Flugregelrechner 12 liefert einen Stellungssollwert, der durch Pfeil 68 dargestellt ist. Der Stellungssollwert ist auf den Eingang 70 des Reglers geschaltet, der durch einen Summationspunkt repräsentiert wird. Der Regler weist eine erste Reglerstufe 72 und eine zweite Reglerstufe 74 auf. Auf den Eingang der ersten Reglerstufe 72, der den Eingang 70 des Reglers bildet, ist der Stellungssollwert und ein Rückführsignal von dem Stellungsgeber 54 geschaltet. Das analoge Ausgangssignal des Stellungsgebers 54 wird von einer Wechselspannung gebildet, die von einem Demodulator 76 demoduliert wird. Das demodulierte Signal wird über ein Anti - Aliasing - Filter 78 auf einen Analog - Digital - Wandler 80 gegeben. In digitalisierter Form beaufschlagt das Rückführsignal dann mit negativem Vorzeichen den Eingang 70 des Reglers und damit die erste Reglerstufe 72. Die erste Reglerstufe 72 erhält somit ein Regelabweichungssignal, das der Abweichung der Stellung des Stellmotors 38 und damit der Steuerfläche von einem vom Flugregelrechner vorgegebenen Stellungssollwert entspricht. Die erste Reglerstufe 72 liefert dann ein Reglerausgangssignal, das einem Stellungssollwert für den Schieber 34 entspricht. Dieses Reglerausgangssignal ist durch einen Pfeil 82 dargestellt.

Das Reglerausgangssignal der ersten Reglerstufe 72 ist auf den Eingang 84 der zweiten Reglerstufe geschaltet, der durch einen Summationspunkt symbolisiert ist. Das analoge Ausgangssignal des Stellungsgebers 62 in Form einer Wechselspannung wird durch einen Demodulator 86 demoduliert. Die demodulierte Signal wird über ein Anti - Aliasing - Filter 88 auf einen Analog - Digital - Wandler 90 gegeben. Das digitalisierte Rückführsignal beaufschlagt mit negativem Vorzeichen den Eingang der zweiten Reglerstufe 74. Das Reglerausgangssignal der zweiten Reglerstufe 74 an einem Ausgang 92 wird durch einen Digital - Analog - Wandler 94 in ein analoges Steuersignal in Form einer Spannung umgesetzt.

Diese Spannung $U_E$ liegt nun an einem Leistungsverstärker 96 an. Der Leistungsverstärker liefert eine Spannung $U_A$ mit geringem Ausgangswiderstand. Diese Spannung $U_A$ liegtan der Magnetwicklung 26 an. Über diese wird der Anker 20 und der damit verbundene Schieber 34 verstellt, der wiederum den Stellmotor 38 und die Kolbenstange 50 steuert. Die erste Reglerstufe 72 mit der Rückführschleife mit den Bauteilen 54,76,78 und 80 bildet einen äußeren Regelkreis. Die zweite Reglerstufe 74 mit der Rückführschleife mit den Bauteilen 62,86,88 und 90 bildet einen inneren Regelkreis.

In entsprechender Weise sind die anderen drei Kanäle aufgebaut.

Im normalen Betrieb liefern die vier Flugregelrechner 10,12,14 und 16 übereinstimmende Stellungssollwerte. Der Linearmotor 18 wird von den Reglern 72,74 in der in Fig.2 dargestellten Weise so angesteuert, daß die Steuerfläche oder die Kolbenstange 50 diesen Stellungssollwert einnimmt. Wenn einer der Flugregelrechner 10,12,14 oder 16 ausfällt, dann sorgt ein "Redundanzmanagement" dafür, daß der fehlerhafte Stellungssollwert eliminiert wird. Das erfordert aber eine gewisse Zeit. Eine Änderung der Spannung $U_A$ an der zugehörigen Magnetwicklung, z.B. 24, führt zu einer Änderung des Stromes und zu einer Änderung des magnetischen Kraftflusses. Durch diese Änderung des magnetischen Kraftflusses wird in den Magnetwicklungen 24 bis 30 eine Spannung induziert, welche den Kraftfluß aufrechtzuerhalten trachtet. Eine Abweichung einer der Spannungen $U_A$ führt daher nur verzögert zu einer Verstellung des Ankers 20. Die Redundanzverwaltung hat daher Zeit, den Fehler zu erkennen und zu eliminieren. Anders als bei der bekannten Ansteuerung der Magnetwicklungen über einen Stromregler wird in den Magnetwicklungen der intakten Kanäle einer solchen induzierten Spannung nicht entgegengewirkt.

**Patentansprüche**

1.  Vorrichtung zum Ansteuern eines von einem Elektromotor (18) betätigbaren Ventils (36) durch redundant vorgesehene Regler (10,12, 14,16), bei welcher

    (a) der Elektromotor (18) eine Mehrzahl von Magnetwicklungen (24,26,28,30) aufweist,

    (b) jede dieser Magnetwicklungen (24,26,28,30) von einem von mehreren redundant vorgesehenen, bei ungestörtem Betrieb im wesentlichen übereinstimmend arbeitenden Reglern (10,12,14,16) über Verstärkermittel (96) erregbar ist,

    (c) die Regler (10,12,14,16) von einem Stellungssollwert (68) und einem durch die Stellung des Ventils (36) bestimmten Rückführsignal beaufschlagt sind,

    dadurch gekennzeichnet, daß

    (d) die Verstärkermittel (96) von einem Leistungsverstärker gebildet sind, der eine Reglerausgangsspannung ($U_E$) in eine Verstärkerausgangsspannung ($U_A$) höherer Leistung umsetzt.

2.  Vorrichtung nach Anspruch 1, dadurch gekennzeichnet, daß der Elektromotor ein Linearmotor (18) ist, durch welchen ein Schieberventil (36) direkt verstellbar ist.

3.  Vorrichtung nach Anspruch 2, dadurch gekennzeichnet, daß das Schieberventil (36) die Druckmittelzufuhr zu einem Stellmotor (38) steuert.

4.  Vorrichtung nach Anspruch 3, dadurch gekennzeichnet, daß

    (a) für jeden Regler (10,12,14,16) ein erster Stellungsgeber (52,54,56,58) mit dem Stellmotor (38) gekoppelt ist,

    (b) für jeden Regler (10,12,14,16) ein zweiter Stellungsgeber (60,62,64,66) mit dem Schieberventil (36) gekoppelt ist,

    (c) jeder Regler (10,12,14,16) eine erste Reglerstufe (72) enthält, auf welche der Stellungssollwert (68) und ein Rückführsignal von dem ersten Stellungsgeber (52,54,56,58) aufgeschaltet ist und welcher einen korrigierten Stellungssollwert für das Schieberventil (36) liefert, und

    (d) jeder Regler (10,12,14,16) weiterhin eine zweite Reglerstufe (74) enthält, auf welche als Sollwertsignal der korrigierte Stellungssollwert von der ersten Reglerstufe (72) und weiterhin ein Rückführsignal von dem zweiten Stellungsgeber (60,62,64,66) aufgeschaltet ist und welche den Leistungsverstärker (96) steuert.

## Claims

1. Device for controlling a valve (36) actuated by an electromotor (18) by redundantly provided controllers wherein

    (a) the electromotor (18) has a plurality of magnet windings (24,26,28,30),

    (b) each of these magnet windings (24,26,28,30) is arranged to be energized through amplifier means (96) by one of several controllers (10,12,14,16) provided redundantly and operating, with undisturbed operation, generally concordantly,

    (c) a desired position value (68) and a feedback signal determined by the position of the valve (36) are applied to the controllers (10,12,14,16),

    characterized in that

    (d) the amplification means (96) are formed by a power amplifier converting a controller output voltage (UE) into an amplifier output voltage (UA) of higher power.

2. Device as claimed in claim 1, **characterized in that** the electromotor is a linear motor (18) arranged to adjust directly a sliding valve (36).

3. Device as claimed in claim 2, **characterized in that** the sliding valve (36) controlls the fluid supply to a servomotor (38).

4. Device as claimed in claim 3, **characterized in that**

    (a) for each controller (10,12,14,16) a first position transmitter (52,54,56,58) is coupled to the servomotor (38),

    (b) for each controller (10,12,14,16) a second position transmitter (60,62,64,66) is coupled to the sliding valve (36),

    (c) each controller (10,12,14,16) comprises a first controller step (72) to which the desired position value and a feedback signal from the first position transmitter (52,54,56,58) are applied and which supplies a corrected desired position value for the sliding valve (36), and

    (d) furthermore, each controller (10,12,14,16) comprises a second controller stage (74) to which is the corrected desired position value from the first controller step (72) as desired value signal, and furthermore a feedback signal from the second position transmitter (60,62,64,66), are applied and which controlls the power amplifier (96).

## Revendications

1. Dispositif destiné à commander une soupape (36) actionnable par un électromoteur (18), au moyen de régulateurs (10,12,14,16) prévus de manière redondante, dans lequel

    (a) l'électromoteur (18) présente plusieurs enroulements magnétiques (24,26,28,30),

    (b) chacun de ces enroulements magnétiques (24,26,28,30) peut être excité par l'un des régulateurs (10,12,14,16) prévus de manière redondante et opérant dans le cas de fonctionnement non-perturbé de manière essentiellement concordante, par des moyens d'amplification (96),

    (c) une valeur de consigne de position (68) et un signal de rétroaction déterminé par la position de la soupape (36) sont appliqués aux régulateurs (10,12,14,16),

    caractérisé par le fait que

    (d) les moyens d'amplification (96) sont formés par un amplificateur de puissance convertissant une tension de sortie de régulateur (U$_E$) en tension de sortie d'amplificateur d'une puissance supérieure (U$_A$).

2. Dispositif selon la revendication 1, caractérisé par le fait que l'électromoteur est un moteur linéaire (18) qui peut directement ajuster une soupape à coulisse (36).

3. Dispositif selon la revendication 2, caractérisé par le fait que la soupape à coulisse (36) commande l'alimentation de fluide vers un servomoteur (38).

4. Dispositif selon la revendication 3, caractérisé par le fait que

    (a) pour chaque régulateur (10,12,14,16) un premier capteur de position (52,54,65,58) est couplé au servomoteur (38),

    (b) pour chaque régulateur (10,12,14,16) un second capteur de position (60,62,64,66) est couplé à la soupape à coulisse (36),

    (c) chaque régulateur (10,12,14,16) comprend un premier échelon de régulateur (72) auquel est appliquée la valeur de consigne de position (68) et un signal de rétroaction du premier capteur de position (52,54,56,58) et qui fournit une valeur de consigne de position corrigée pour la soupape à coulisse (36), et

    (d) chaque régulateur (10,12,14,16) comprend, en outre, un second échelon de régulateur (74) auquel est appliquée comme signal de valeur de consigne, la valeur de consigne de position corrigée du premier échelon de régulateur (72), et en outre, un signal de rétroaction du second capteur de position (60,62,64,66), et qui commande l'amplificateur de puissance (96).

Fig.1

Fig.2

8